# EUROPEAN PATENT APPLICATION

(11) **EP 2 280 444 A1**
(43) Date of publication of application: **02.02.2011**
(21) Application number: 09750613.3
(22) Date of filing: 14.05.2009
(51) Int. Cl.: H01M 10/40, H01M 4/02

(54) **SECONDARY BATTERY**

(30) Priority: 19.05.2008 JP 2008131050; 11.09.2008 JP 2008233574
(71) Applicant: NEC Corporation, Minato-ku Tokyo 108-8001 (JP); NEC Energy Devices, Inc., Chuo-ku Sagamihara-shi, Kanagawa 252-5298 (JP)
(72) Inventor: MATSUMOTO, Kazuaki, Tokyo 108-8001 (JP); NAKAHARA, Kentaro, Tokyo 108-8001 (JP); IWASA, Shigeyuki, Tokyo 108-8001 (JP); ISHIKAWA, Hitoshi, Sagamihara-shi, Kanagawa 252-5298 (JP); KANEKO, Shinako, Sagamihara-shi, Kanagawa 252-5298 (JP); UTSUGI, Koji, Sagamihara-shi, Kanagawa 252-5298 (JP)
(74) Representative: Glawe, Delfs, Moll
(86) International application number: PCT/JP2009/059301
(87) International publication number: WO 2009/142251

(57) **Abstract**

This invention relates to a highly safe secondary battery. In the secondary battery of this invention, a positive electrode is formed of an oxide which adsorbs/desorbs lithium ions; a negative electrode is formed of a carbon material which adsorbs/desorbs lithium ions; and an electrolyte solution is formed of an ion liquid and a phosphoric acid ester derivative. Consequently, the secondary battery can be highly safe. Since a phosphate ester and an ion liquid are contained at the same time, high discharge capacity can be maintained even when the phosphate ester is used at a high concentration.

## Description

### Technical Field

This invention relates to a highly safe secondary battery.

### Background Art

As a secondary battery capable of being charged and discharged repeatedly, a lithium-based secondary battery is mainly used due to its high energy density The lithium-based secondary battery having a high energy density includes a positive electrode, a negative electrode, and an electrolyte as constituent elements. In general, as a positive active material, a lithium-containing transition metal oxide is used, and as a negative active material, lithium metal, a lithium alloy, or a carbon material that absorbs and desorbs lithium ions are used. As an electrolyte, an organic solvent is used, in which a lithium salt such as lithium borate tetrafluoride (LiBF₄) or lithium phosphate hexafluoride (LiPF₆) is dissolved. As an organic solvent, an aprotic organic solvent such as ethylene carbonate or propylene carbonate is used.

The above-mentioned organic solvent is generally volatile and inflammable.

Therefore, in the case where a lithium-based secondary battery is overcharged or used roughly, the thermal runway reaction of the positive electrode occurs, which may lead to ignition. In order to prevent this, a so-called separator shutdown mechanism is incorporated in a battery, which prevents the later generation of Joule's heat caused by the clogging of a separator before the thermal runway reaction start temperature. Further, an attempt has been made so as to enhance the safety of a lithium-based secondary battery by using lithium nickelate (LiNiO₂) or lithium manganate (LiMn₂O₄) having a higher thermal runway reaction start temperature than that of lithium cobaltate (LiCoO₂) as a positive electrode. In recent years, the use of ion liquid known to be incombustible and nonvolatile in an electrolyte solution of a lithium-based secondary battery has been considered, seeking for further safety (Patent Document 1: Japanese Unexamined Patent Application Publication (JP-A) No. 10-092467, Patent Document 2: Japanese Unexamined Patent Application Publication (JP-A) No. 11-086905).

Conventional ion liquid is difficult to handle in air due to high hygroscopicity. However, in 1992, Wilkes et al. developed 1-ethyl-3-methylimidazolium tetrafluoroborate that is stable even in the atmosphere. Taking advantage of this development, ion liquid formed of anions such as trifluoromethanesulphonylimide came to be developed mainly in a system including nitrogen-containing compound cations, and the study of using the ion liquid in a battery came to be conducted extensively. Typical examples of the ion liquid include a quarternary ammonium system, an imidazolium system, and a pyridinium system each including nitrogen-containing compound cations. The ion liquid having a conjugate structure such as an imidazolium system or a pyridinium system in cations have general properties such as low viscosity and high ion conductivity comparable to that of an organic solvent even when a lithium salt is dissolved therein. However, the reduction resistance is superior to that of Li by as high as about 1.0 V. Therefore, in the case where such ion liquid is used in a lithium-based secondary battery, there is a problem that the ion liquid is decomposed on a negative electrode. On the other hand, the ion liquid formed of quaternary ammonium-based cations has general properties of being decomposed at a potential substantially similar to or inferior to that of Li. Therefore, although there is no problem of reduction resistance even when such ion liquid is used in a lithium-based secondary battery, the ion conductivity thereof is very small when a lithium salt is dissolved therein, which may influence rate characteristics.

On the other hand, ion liquid containing bis(fluorosulphonyl)imide anions (-N(SO₂F)₂) as a constituent element has been reported in a society, etc. The ion liquid has low viscosity and high ion conductivity, and has a high potential window when a lithium salt is dissolved therein. Further, as the single use of the ion liquid can operate a lithium-based secondary battery using a carbon material such as graphite, the ion liquid is drawing attention (Non-patent Document 1: Journal of Power Sources 160 (2006) 1308-1313, Non-patent Document 2: Journal of Power Sources 162 (2006) 658-662). However, the ion liquid has low thermal stability and is likely to be burnt, and hence, does not contribute to the safety of a battery.

As a technology that renders an electrolyte solution incombustible, there is a technology of mixing two kinds: ion liquid and a carbonate-based organic solvent (Non-patent Document 3: Journal of Power Sources 1021-1026 (174) 2007). In order to render the electrolyte solution incombustible using the technology, it is necessary to mix at least 40% of the ion liquid, and it has been reported that mixing 25% or more of the ion liquid influences the rate characteristics and discharge capacity.

Further, as a technology that renders an electrolyte solution incombustible, there is also a technology of mixing a phosphoric acid ester (Non-patent Document 4: Journal of The Electrochemistry Society 148 (10) 2001). The phosphoric acid ester has a higher incombustible effect than that of the ion liquid. However, in order to render an electrolyte solution incombustible, it is necessary to mix at least 30% of the phosphoric acid ester in a carbonate-based electrolyte solution. However, in the case where at least 20% of the phosphoric acid ester is mixed in a carbonate-based organic solvent, the discharge capacity is reduced extremely.

In addition, a technology of mixing a phosphoric acid ester with ethyl methylimidazolium bis trifluoromethanesulphonyl imide (hereinafter, abbreviated as EMITFSI) which is ion liquid has been reported (Patent Document 3: Japanese Unexamined Patent Application Publication (JP-A) No. 11-329495). Coin cell evaluation was performed using an electrolyte solution formed of the same composition as that of an example described in the patent document. However, it was confirmed that the discharge capacity of an electrolyte solution with at least 20% of the phosphoric acid ester being mixed therein was reduced extremely. Therefore, in order to maintain battery characteristics, it is necessary to set the mixing ratio of the phosphoric acid ester to be 20% or less. The reason for this is considered as follows: both the liquids have poor reduction resistance, and hence, the liquids are decomposed on electrodes. Further, an electrolyte solution in which only 20% of the phosphoric acid ester is mixed, sufficient incombustible effect cannot be exhibited.

As described above, a perfect incombustible electrolyte solution, which normally operates a lithium ion battery using a negative electrode made of a carbon material such as graphite, has not been found at present.

### Disclosure of the Invention

### Problem to be Solved by the Invention

As described above, there is a prior patent document in which ion liquid is used, as a technology of rendering an electrolyte solution incombustible. The ion liquid is non-volatile, and can enhance the safety of a lithium ion secondary battery when used as an electrolyte solution. However, the ion liquid has the above-mentioned problems.

Further, according to the technology of mixing a phosphoric acid ester with an existing carbonate-based organic solvent, when 20% or more of the phosphoric acid ester is mixed, the discharge capacity is reduced. Therefore, there is a problem that a phosphoric acid ester cannot be mixed to a certain ratio or more.

The inventors of this application found that, even when a phosphoric acid ester is used at a high concentration, a high discharge capacity can be maintained through inclusion of the phosphoric acid ester and ion liquid simultaneously. Further, the inventors of this application found that the discharge capacity is increased further when a carbonate-based organic solvent is contained simultaneously.

An object of this invention is to provide a more highly safe secondary battery by rendering an electrolyte solution incombustible.

### Means to Solve the Problem

The secondary battery of this invention is **characterized in that** a positive electrode is formed of an oxide that absorbs and desorbs lithium ions, a negative electrode is formed of a carbon material that absorbs and desorbs lithium ions, and an electrolyte solution is formed of ion liquid and a phosphoric acid ester derivative.

### Effect of the Invention

According to this invention, a highly safe secondary battery is obtained.

### Brief Description of the Drawing

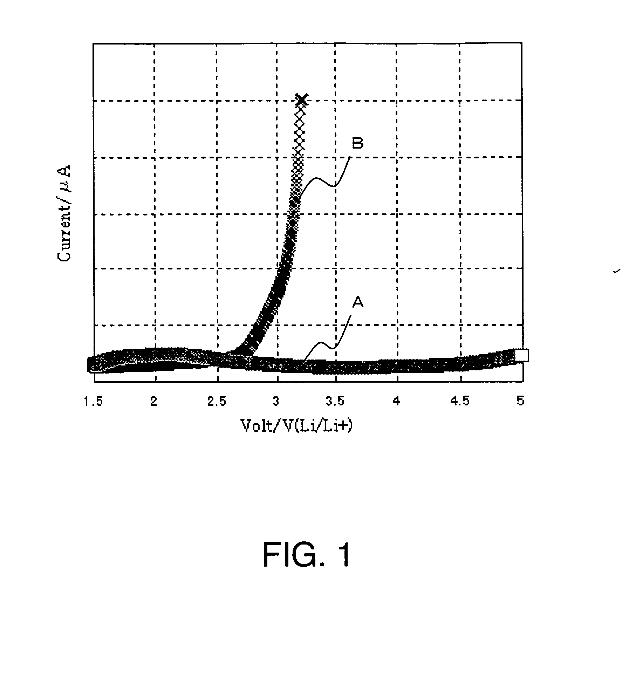

Fig. 1 illustrates aluminum corrosion test results of electrolyte solutions of Example 2 and Comparative Example 4 by an LV method.

### Best Mode for Embodying the Invention

Hereinafter, a preferred embodiment of this invention is described in detail. The basic configuration of a secondary battery of this invention includes at least a positive electrode, a negative electrode, and an electrolyte as constituent elements. The positive electrode of a lithium ion secondary battery is formed of an oxide made of a material that absorbs and desorbs lithium, and the negative electrode is formed of a carbon material that absorbs and desorbs lithium. Further, the electrolyte solution contains ion liquid and a phosphoric acid ester derivative simultaneously.

As the embodiment of this invention, materials used in the lithium ion secondary battery and methods of producing constituent members are described. However, this invention is not limited thereto. First, as materials used in the lithium ion secondary battery, ion liquid, a phosphoric acid ester derivative, a carbonate-based organic solvent, a coating formation additive, an electrolyte solution, a positive electrode, a negative electrode, a separator, and a battery shape are described.

### <Ion liquid>

The ion liquid is an ion compound in a liquid form at room temperature, and is formed of a cation component and an anion component. The ion liquid used in this invention is **characterized in that** the cation component contains cations generally having high reduction resistance such as pyrrolidinium and piperidinium as a constituent element. Further, as the cation component of the ion liquid, a quaternary ammonium system formed of nitrogen-containing compound cations having a skeleton represented by Chemical Formula 1, a quaternary phosphonium system formed of phosphorus-containing compound cations, tertiary sulphonium system formed of sulfur-containing compound cations, or the like can be used.

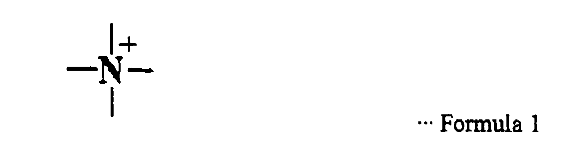

Examples of the high reduction-resistant cation include, but are not limited to, tetraalkylammonium cation, pyrrolidinium cation, piperidinium cation, pyrazolium cation, pyrrolinium cation, pyrrolium cation, pyridinium cation, and thiazolium cation.

Examples of the tetraalkylammonium cation include, but are not limited to, diethylmethylmethoxyethyl ammonium cation, trimethylethylammonium cation, trimethylpropylammonium cation, trimethylhexylammonium cation, and tetrapentylammonium cation.

Examples of the pyrrolidinium cation are represented by Chemical Formula 2 and include 1,1-dimethylpyrrolidinium cation, 1-ethyl-1-methylpyrrolidinium cation, 1-methyl-1-propylpyrrolidinium cation, and 1-butyl-1-methylpyrrolidinium cation. However, the examples are not limited to those compounds.

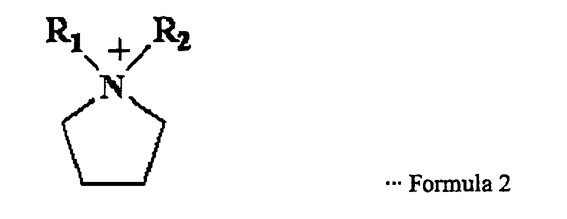

Examples of the piperidinium cation are represented by Chemical Formula 3 and include 1,1-dimethylpiperidinium cation, 1-ethyl-1-methylpiperidmium cation, 1-methyl-1-propylpiperidinium cation, and 1-butyl-1-methylpiperidinium cation. However, the examples are not limited to those compounds.

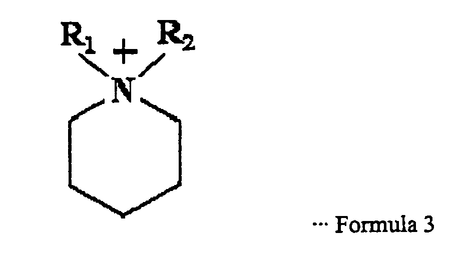

Examples of the pyrazolium cation include, but are not limited to, 1,2-dimethylpyrazolium cation, 1-ethyl-2-methylpyrazolium cation, 1-propyl-2-methylpyrazolium cation, and 1-butyl-2-methylpyrazolium cation.

Examples of the pyrrolinium cation include, but are not limited to, 1,2-dimethylpyrrolinium cation, 1-ethyl-2-methylpyrrolinium cation, 1-propyl-2-methylpyrrolinium cation, and 1-butyl-2-methylpyrrolinium cation.

Examples of the pyrrolium cation include, but are not limited to, 1,2-dimethylpyrrolium cation, 1-ethyl-2-methylpynrolium cation, 1-propyl-2-methylpyrrolium cation, and 1-butyl-2-methylpyrrolium cation.

Examples of the pyridinium cation include, but are not limited to, N-methylpyridinium cation, N-ethylpyridinium cation, and N-butylpyridinium cation.

Examples of the thiazolium cation include, but are not limited to, ethyl dimethyl thiazolium cation, butyl dimethyl thiazolium cation, hexadimethyl thiazolium cation, and methoxy ethyl thiazolium cation.

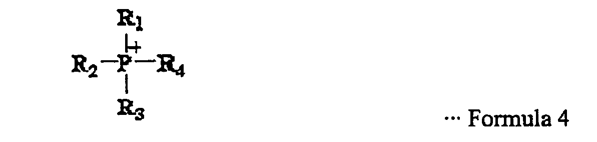

As the quaternary phosphonium-based cation formed of a phosphorus-containing compound, there is exemplified a phosphonium cation having a skeleton represented by Chemical Formula 4. Of such cations, a high reduction-resistant ion liquid is particularly desirable. In Chemical Formula 4, R₁, R₂, R₃, and R₄ each represent an alkyl group, a halogenated alkyl group, an alkenyl group, a cyano group, a phenyl group, an amino group, a nitro group, or an alkoxy group, and may be identical to or different from each other. In addition, R₁ to R₄ may have a ring structure such as a five-membered ring or a six-membered ring.

Specific examples of the cations include, but are not limited to, tetraethylphosphonium cation, tetramethylphosphonium cation, tetrapropylphosphonium cation, tetrabutylphosphonium cation, triethylmethylphosphonium cation, trimethylethylphosphonium cation, dimethyldiethylphosphonium cation, trimethylpropylphosphonium cation, trimethylbutylphosphonium cation, dimethylethylpropylphosphonium cation, and methylethylpropylbutylphosphonium cation.

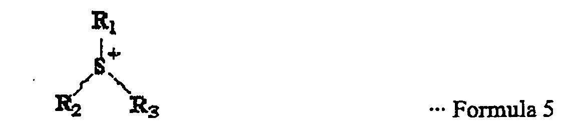

As the tertiary sulfonium-based cation formed of a sulfur-containing compound cation, there is exemplified a sulfonium ion having a skeleton represented by Chemical Formula 5. Of such ions, a high reduction-resistant ion liquid is particularly desirable. In the formula 5, R₁, R₂, and R₃ each represent an alkyl group, a halogenated alkyl group, an alkenyl group, a cyano group, a phenyl group, an amino group, a nitro group, or an alkoxy group, and may be identical to or different from each other. In addition, R₁ to R₃ may have a ring structure such as a five-membered ring or a six-membered ring. The ion liquid having the cation may be used alone, or two or more kinds of them may be used as a mixture.

Specific examples of the cations include, but are not limited to, trimethylsulfonium cation, triethylsulfonium cation, tributylsulfonium cation, tripropylsulfonium cation, diethylmethylsulfonium cation, dimethylethylsulfonium cation, dimethylpropylsulfonium cation, dimethylbutylsulfonium cation, methylethylpropylsulfonium cation, and methylethylbutylsulfonium cation. The ion liquid may be used alone, or two or more kinds of them may be used as a mixture.

As an anion of the ion liquid, there are exemplified ClO₄⁻, PF₆⁻, BF₄⁻, AsF₆⁻, B(C₂O₄)₂⁻, CF₃SO₃⁻, cr, Br⁻, and r. Of those, there may be used BF₃(CF₃)⁻, BF₃(C₂F₅)⁻, BF₃(C₃F₇)⁻_{,} BF₂(CF₃)₂⁻, or BF₂(CF₃)(C₂F₅)⁻ in each of which at least one fluorine atom of BF₄⁻ is substituted with a fluorinated alkyl group, or PF₅(CF₃)⁻, PF₅(C₂F₅)⁻, PF₅(C₃F₇)⁻, PF₄(CF₃)₂⁻, PF₄(CF₃)(C₂F₅)⁻, or PF₃(CF₃)₃⁻ in each of which at least one fluorine atom of PF₆⁻ is substituted with a fluorinated alkyl group.

In addition, there is also exemplified an anion including the chemical structure represented by Chemical Formula 6 or the like. R₁ and R₂ in Chemical Formula 6 are each selected from the group consisting of a halogen and a fluorinated alkyl. Further, R₁ and R₂ may be different from each other. Specific examples of the anion include ⁻N(FSO₂)₂, ⁻N(CF₃SO₂)₂, ⁻N(C₂F₅SO₂)₂, and ⁻N(CF₃SO₂)(C₄F₉SO₂).

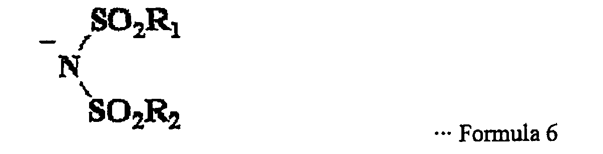

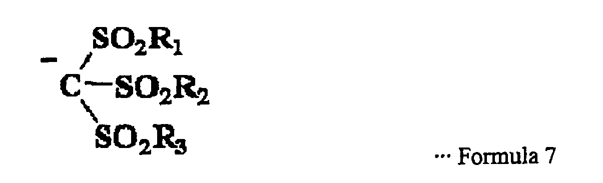

In addition, as the anion, there is also exemplified a salt formed of a compound including the chemical structure represented by Chemical Formula 7. R₁, R₂, and R₃ in Chemical Formula 7 are each selected from the group consisting of a halogen and a fluorinated alkyl. Further, R₁, R₂, and R₃ may be different from each other. Specific examples of the anion include ⁻C(CF₃SO₂)₃ and ⁻C(C₂F₅SO₂)₃.

In this invention, ion liquid containing these cations and anions as constituent elements can be used. However, it is desirable to use ion liquid using such imide anions as represented by Chemical Formula 6 showing hydrophobicity, as an electrolyte solution of a battery, compared with ion liquid using anions such as BF₄⁻ and PF₆⁻ showing hydrophilicity. Further, ion liquids formed of two kinds of different cations can be mixed.

### <Phosphoric acid ester derivative>

Examples of the phosphoric acid ester derivative in this invention include compounds represented by the following Chemical Formulae 8 and 9.

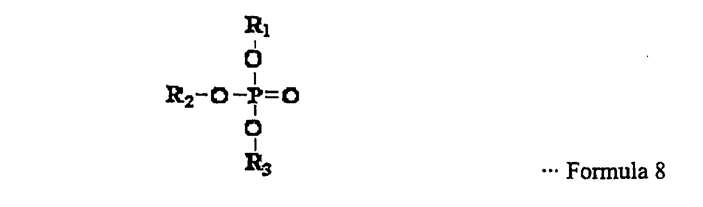

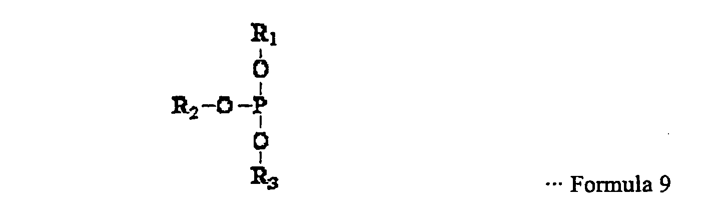

Here, R₁, R₂, and R₃ in Chemical Formulae 8 and 9 each represent an alkyl group having 7 or less of carbon atoms, a halogenated alkyl group, an alkenyl group, a cyano group, a phenyl group, an amino group, a nitro group, an alkoxy group, a cycloalkyl group, or a silyl group, and include a ring structure in which any of or all of R₁, R₂, and R₃ are bonded to each other. Specific examples of the compounds include trimethyl phosphate, triethyl phosphate, tributyl phosphate, trioctyl phosphate, triphenyl phosphate, dimethyl ethyl phosphate, dimethyl propyl phosphate, dimethyl butyl phosphate, diethyl methyl phosphate, dipropyl methyl phosphate, dibutyl methyl phosphate, methyl ethyl propyl phosphate, methyl ethyl butyl phosphate, and methyl propyl butyl phosphate. Further, there are exemplified trimethyl phosphite, triethyl phosphite, tributyl phosphate, triphenyl phosphite, dimethyl ethyl phosphite, dimethyl propyl phosphite, dimethyl butyl phosphite, diethyl methyl phosphite, dipropyl methyl phosphite, dibutyl methyl phosphite, methyl ethyl propyl phosphite, methyl ethyl butyl phosphite, methyl propyl butyl phosphite, and dimethyl trimethyl silyl phosphite. Trimethyl phosphate, triethyl phosphate, or trioctyl phosphate is particularly preferred because the compounds are highly stable.

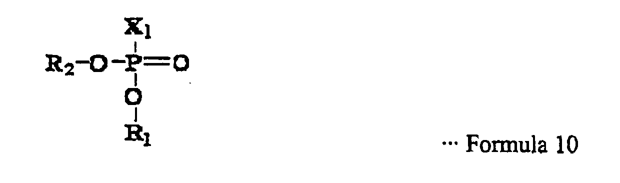

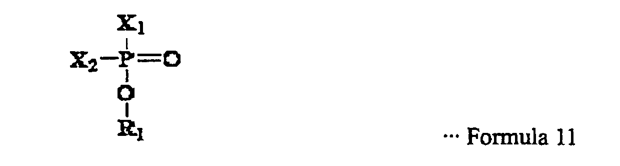

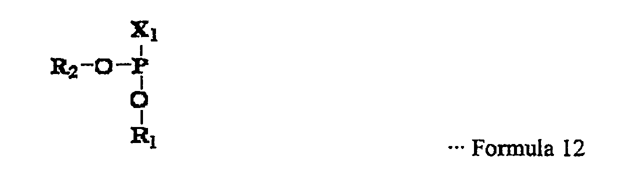

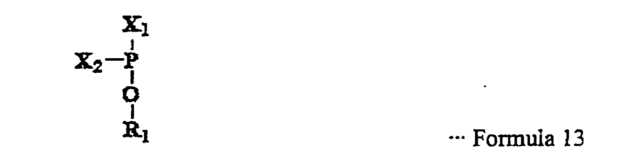

In addition, as the phosphoric acid ester derivative, there are exemplified the compounds each represented by the above-mentioned general chemical formulae 10, 11, 12, or 13. R₁ and R₂ in Chemical Formulae 10, 11, 12, and 13 may be identical to or different from each other, each represent an alkyl group having 7 or less carbon atoms, a halogenated alkyl group, an alkenyl group, a cyano group, a phenyl group, an amino group, a nitro group, an alkoxy group, or a cycloalkyl group, and include a ring structure by the bonding of R₁ and R₂. Further, X₁ and X₂ each represent a halogen atom, and may be identical to or different from each other.

Specific examples of the compounds include methyl (trifluoroethyl) fluorophosphate, ethyl (trifluoroethyl) fluorophosphate, propyl (trifluoroethyl) fluorophosphate, allyl (trifluoroethyl) fluorophosphate, butyl (trifluoroethyl) fluorophosphate, phenyl (trifluoroethyl) fluorophosphate, bis(trifluoroethyl) fluorophosphate, methyl (tetrafluoropropyl) fluorophosphate, ethyl (tetrafluoropropyl) fluorophosphate, tetrafluoropropyl (trifluoroethyl) fluorophosphate, phenyl (tetrafluoropropyl) fluorophosphate, bis(tetrafluoropropyl) fluorophosphate, methyl (fluorophenyl) fluorophosphate, ethyl (fluorophenyl) fluorophosphate, fluorophenyl (trifluoroethyl) fluorophosphate, difluorophenyl fluorophosphate, fluorophenyl (tetrafluoropropyl) fluorophosphate, methyl (difluorophenyl) fluorophosphate, ethyl (difluorophenyl) fluorophosphate, difluorophenyl (trifluoroethyl) fluorophosphate, bis(difluorophenyl) fluorophosphate, difluorophenyl (tetrafluoropropyl) fluorophosphate, fluoroethylene fluorophosphate, difluoroethylene fluorophosphate, fluoropropylene fluorophosphate, difluoropropylene fluorophosphate, trifluoropropylene fluorophosphate, fluoroethyl difluorophosphate, difluoroethyl difluorophosphate, fluoropropyl difluorophosphate, difluoropropyl difluorophosphate, trifluoropropyl difluorophosphate, tetrafluoropropyl difluorophosphate, pentafluoropropyl difluorophosphate, fluoroisopropyl difluorophosphate, difluoroisopropyl difluorophosphate, trifluoroisopropyl difluorophosphate, tetrafluoroisopropyl difluorophosphate, pentafluoroisopropyl difluorophosphate, hexafluoroisopropyl difluorophosphate, heptafluorobutyl difluorophosphate, hexafluorobutyl difluorophosphate, octafluorobutyl difluorophosphate, perfluoro-t-butyl difluorophosphate, hexafluoroisobutyl difluorophosphate, fluorophenyl difluorophosphate, difluorophenyl difluorophosphate, 2-fluoro-4-methylphenyl difluorophosphate, trifluorophenyl difluorophosphate, tetrafluorophenyl difluorophosphate, pentafluorophenyl difluorophosphate, 2-fluoromethylphenyl difluorophosphate, 4-fluoromethylphenyl difluorophosphate, 2-difluoromethylphenyl difluorophosphate, 3-difluoromethylphenyl difluorophosphate, 4-difluoromethylphenyl difluorophosphate, 2-trifluoromethylphenyl difluorophosphate, 3-trifluoromethylphenyl difluorophosphate, 4-trifluoromethylphenyl difluorophosphate, and 2-fluoro-4-metoxyphenyl difluorophosphate.

Of those, preferred are fluoroethylene fluorophosphate, bis(trifluoroethyl) fluorophosphate, fluoroethyl difluorophosphate, trifluoroethyl difluorophosphate, propyl difluorophosphate, and phenyl difluorophosphate. More preferred are fluoroethyl difluorophosphate, tetrafluoropropyl difluorophosphate, and fluorophenyl difluorophosphate in terms of low viscosity and flame retardancy.

An object of this invention is to mix these phosphoric acid ester derivatives with an electrolyte solution to render the solution incombustible. In order to obtain a higher incombustible effect, of phosphoric acid ester derivatives, the one in which at least one atom excluding a phosphorus atom is substituted by a halogen atom is particularly preferred. As the concentration of the phosphoric acid ester derivative is higher, an incombustible effect is obtained. Therefore, it is preferred that the concentration of the phosphoric acid ester derivatives be at least 15% by volume. One kind of the phosphoric acid ester derivatives may be used alone, two or more kinds of them may be used as a mixture.

### <Carbonate-based organic solvent>

It is necessary to mix simultaneously the carbonate-based organic solvents described below in the electrolyte solution of this invention. Examples of the carbonate-based organic solvents include ethylene carbonate (EC), propylene carbonate (PC), butylene carbonate, chloroethylene carbonate, dimethyl carbonate (DMC), ethyl methyl carbonate (EMC), diethyl carbonate (DEC), dimethoxyethane, diethyl ether, phenyl methyl ether, tetrahydrofuran (THF), γ-butyrolactone, and γ-valerolactone.

In terms of stability, ethylene carbonate, diethyl carbonate, propylene carbonate, dimethyl carbonate, and ethyl methyl carbonate are particularly preferred. However, the carbonate-based organic solvent is not limited thereto. It is preferred that the concentration of the carbonate-based organic solvents is at least 10% by volume so as to obtain a sufficient effect of enhancing a capacity. However, when the mixing ratio is too high, an electrolyte solution is rendered combustible. Therefore, the concentration is preferably less than 80% by volume, or more preferably less than 60% by volume. One kind of the carbonate-based organic solvent may be used alone, or two or more kinds of them may be used in combination.

### <Coating formation additive>

The coating formation additive of this invention refers to the one covering the surface of a negative electrode electrochemically. Specific examples of the coating formation additive include vinyl ethylene carbonate (VC), ethylene sulfite (ES), propane sultone (PS), fluoroethylene carbonate (FEC), succinic anhydride (SUCAH), diallyl carbonate (DAC), and diphenyldisulfide (DPS). However, the coating formation additive is not particularly limited thereto. As an increase in added amount adversely affects battery characteristics, it is desired that the added amount be less than 10% by mass.

### <Electrolyte solution>

The electrolyte solution transports charge carriers between a negative electrode and a positive electrode, and for example, ion liquid with an electrolyte salt being dissolved therein can be used. Examples of the electrolyte salt include LiPF₆, LiBF₄, LiAsF₆, LiClO₄, Li₂B₁₀Cl₁₀, Li₂B₁₂Cl₁₂, LiB(C₂O₄)₂, LiCF₃SO₃, LiCl, LiBr, and LiI. Of those, there may be used LiBF₃(CF₃), LiBF₃(C₂F₅), LiBF₃(C₃F₇), or LiBF₂(CF₃)₂, LiBF₂(CF₃)(C₂F₅) in each of which at least one fluorine atom of LiBF₄ is substituted with a fluorinated alkyl group, or LiPF₅(CF₃), LiPF₅(C₂F₅), LiPF₅(C₃F₇), LiPF₄(CF₃)₂, LiPF₄(CF₃)(C₂F₅),or LiPF₃(CF₃)₃ in each of which at least one fluorine atom of LiPF₆ is substituted with a fluorinated alkyl group.

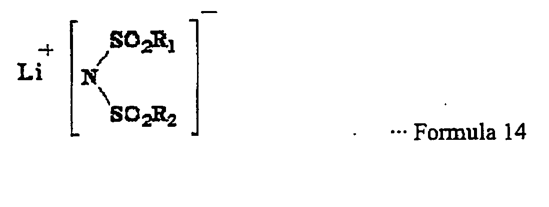

Further, as the electrolyte salt, there is also exemplified a salt formed of a compound containing the chemical structure represented by Chemical Formula 14. R₁ and R₂ in Chemical Formula 14 are each selected from the group consisting of halogen and alkyl fluoride. Further, R₁ and R₂ may be different from each other. Specific examples thereof include LiN(FSO₂)₂, LiN(CF₃SO₂)₂, LiN(C₂F₅SO₂)₂, and LiN(CF₃SO₂)(C₄F₉SO₂).

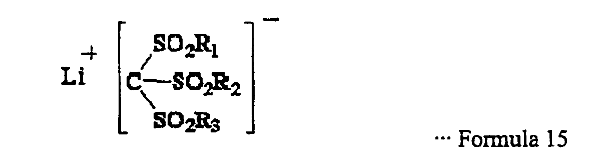

Further, as the electrolyte salt, there is also exemplified a compound containing the chemical structure represented by Chemical Formula 15. R₁, R₂, and R₃ in Chemical Formula 15 are each selected from the group consisting of halogen and alkyl fluoride. Further, R₁, R₂, and R₃ may be different from each other. Specific examples thereof include LiC(CF₃SO₂)₃ and LiC(C₂F₅SO₂)₃.

### <Positive electrode>

As the oxide positive electrode material in this invention, LiMn₂O₄, LiCoO₂, LiNiO₂, LiFePO₄, or LixV₂O₅ (0<x<2), or a lithium-containing transition metal oxide such as transition metal of these compounds partially substituted by another metal can be used. Further, the positive electrode in this invention can be formed on a positive electrode collector, and as the positive electrode collector, a foil or a metal plate each formed of nickel, aluminum, copper, gold, silver, an aluminum alloy, stainless steel, or carbon can be used.

### <Negative electrode>

As the carbon negative electrode material in this invention, carbon materials such as pyrocarbons, cokes (pitch coke, needle coke, petroleum coke, etc.), graphites, glass-like carbons, organic polymer compound baked substance (phenol resin, furan resin, etc. baked at an appropriate temperature, followed by carbonating), carbon fibers, activated carbon, and black lead can be used. In order to strengthen the connection between the respective constituent materials of the negative electrode, a binding agent can also be used. Examples of such binding agent include polytetrafluoroethylene, polyvinylidene fluoride, vinylidene fluoride-hexafluoropropylene copolymer, vinylidene fluoride-tetrafluoroethylene copolymer, styrene-butadiene copolymer rubber, polypropylene, polyethylene, polyimide, partially carboxylated cellulose, and various kinds of polyurethane. Negative electrodes in this invention can be formed on the negative electrode collector. As the negative electrode collector, there can be used a foil or metal plate each formed of nickel, aluminum, copper, gold, silver, aluminum alloy, stainless steel, carbon, or the like.

Of negative electrodes using the carbon material to be used in this invention, a negative electrode with a coating formed thereon previously can also be used. The coating is generally called Solid Electrolyte Interphase (SEI), and refers to a film that is generated on a negative electrode in the process of charging and discharging a lithium ion battery, and passes ions although not passing an electrolyte solution. As a method of producing a coating, there are various methods such as vapor deposition and chemical modification. However, it is desired to produce a coating electrochemically. According to the production method, a battery formed of an electrode made of a carbon material and an electrode made of a material that desorbs lithium ions as a counter electrode placed with a separator placed therebetween, the battery is charged and discharged at least once, and thus, a coating is generated on a negative electrode. As the electrolyte solution used at this time, a carbonate-based electrolyte solution with a lithium salt being dissolved therein can be used. After the charging and discharging, the electrode made of a carbon material is taken out to be used as a negative electrode of this invention. Further, an electrode in which lithium ions are inserted in a layer of a carbon material, finished with discharging, may be used.

### <Separator>

In the lithium ion secondary battery of this invention, a separator such as a porous film, a cellulose film, or nonwoven fabric made of polyethylene, polypropylene, etc. can also be used so that the positive electrode and the negative electrode do not come into contact with each other. One of the separators may be used alone, or two or more kinds of them may be used in combination.

### <Battery shape>

In this invention, the shape of a secondary battery is not particularly limited, and a conventionally known shape can be used. Examples of the battery shape include a cylindrical shape, a square shape, a coin shape, and a sheet shape. Such battery is produced by sealing an electrode laminate or a winding of the above-mentioned positive electrode, negative electrode, electrolyte, separator, etc. with a metal case, a resin case, a laminate film made of a metal foil such as an aluminum foil and a synthetic resin film, etc. However, this invention is not limited thereto.

Next, methods of producing the electrolyte solution, the positive electrode, the negative electrode, and the coin-type secondary battery in this invention using the above-mentioned materials is described.

### <Method of producing an electrolyte solution>

An electrolyte solution was produced by dissolving a lithium salt in a solution in which ion liquid, a phosphoric acid ester derivative, and a carbonate-based organic solvent are mixed in a dry room.

### <Method of producing a positive electrode>

VGCF (produced by Showa Denko K.K.) as a conductant agent was mixed with a lithium manganese complex oxide (LiMn₂O₄) based material as a positive active material, and the mixture was dispersed in N-methylpyrrolidone (NMP) to obtain a slurry. After that, the slurry was applied to an aluminum foil as a positive electrode collector and dried to produce a positive electrode with a diameter of 12 mmΦ.

### <Method of producing a negative electrode>

A graphite-based material as a negative active material was dispersed in N-methylpyrrolidone (NMP) to obtain a slurry. After that, the slurry was applied to a copper foil as a negative electrode collector and dried. After that, an electrode with a diameter of 12 mmΦ was produced. In Examples 1 to 12 and Comparative Examples 1 to 5, negative electrodes produced by this method were used.

Further, as the negative electrode used in this invention, an electrode (hereinafter, referred to as negative electrode with an SEI) **characterized in that** a coating is formed on the surface of a negative electrode previously may be used. As a method of producing the electrode, a coin cell including lithium metal as a counter electrode placed on the above-mentioned electrode via a separator and an electrolyte solution was produced, and the coin cell was discharged and charged in this order at a rate of 1/10C for 10 cycles. Thus, a coating was formed on the surface of the negative electrode electrochemically.

The electrolyte solution used herein was obtained by dissolving lithium hexafluorophosphate (hereinafter, abbreviated as LiPF₆: molecular weight: 151.9) in such an amount that the concentration of the resultant solution might be 1 mol/L (1 M) in a carbonate-based organic solvent, followed by adjustment. As the carbonate-based organic solvent, there was used a mixed solution (hereinafter, abbreviated as EC/DEC or EC/DEC (3:7)) in which the volume ratio of ethylene carbonate (EC) and diethyl carbonate (DEC) was 30:70.

In this case, the cut-off potential was 0 V at a time of discharging and 1.5 V at a time of charging. After the 10th charging, the coin cell was decomposed, and the electrode (negative electrode with an SEI) made of graphite was taken out. The electrode thus taken out was used as a negative electrode for coin cell evaluation in Examples 13 to 34 and Comparative Examples 6 to 12 as the negative electrode of this invention.

### <Method of producing coin-type secondary battery>

The positive electrode obtained by the above-mentioned method was placed on a positive electrode collector also functioning as a coin cell receiver made of stainless steel, and laminated on a negative electrode made of graphite via a separator made of a porous polyethylene film to obtain an electrode laminate. The electrolyte solution obtained by the above-mentioned method was injected into the obtained electrode laminate, and the resultant electrode laminate was impregnated with the electrolyte solution in vacuum. Gaps in the electrode and the separator were filled with the electrolyte solution by impregnating the electrode laminate with the electrolyte solution sufficiently. Then, an insulating packing and the negative electrode collector also functioning as a coin cell receiver were stacked to be integrated by a dedicated caulking machine. Thus, a coin-type secondary battery was produced.

### Example

Hereinafter, this invention is described by way of examples more specifically. As Examples 1 to 34, there were produced lithium ion secondary batteries in which the ion liquid, phosphoric acid ester derivative, carbonate-based organic solvent, a composition ratio thereof, additive, and a lithium salt described in the embodiment were varied. For comparison, Comparative Examples 1 to 12 were produced, and subjected to flammability test evaluation and measured for discharge capacity.

The flammability test evaluation was conducted as follows. 50 µL of an electrolyte solution was soaked in glass fiber filter paper with a width of 3 mm, a length of 30 mm, and a thickness of 0.7 mm. One side of the filter paper was held with tweezers, and the other side was brought close to flame of a gas burner with a height of 2 cm. After the other side was brought close to flame for 2 seconds, the filter paper was placed away from the flame, and the presence or absence of the flame was checked visually. In the case where the flame was not observed, the other side was brought close to the flame for further 3 seconds, and thereafter, placed away from the flame. The presence or absence of the flame was checked visually. The case where the flame was not observed twice was determined as "nonflammable", and the case where the flame was observed at one of the first and second times was determined as "inflammable."

For measurement of discharge capacity, the discharge capacity was measured using the coin-type lithium secondary battery produced by the method described above. The discharge capacity of the coin-type lithium secondary battery was evaluated by the following procedure. First, the lithium secondary battery was charged at a constant current of 0.025C with an upper limit voltage of 4.2 V, and discharged at a current of 0.025C with a 3.0 V cut-off. The discharge capacity observed at this time was set to be an initial discharge capacity. The discharge capacity in the present example refers to a value per positive active material weight.

As an aluminum corrosion test method, Linear Sweep Voltammetry (hereinafter, abbreviated as LV) measurement was conducted. Using an evaluation electrolyte solution and a tripolar cell including an aluminum electrode as a working electrode, Li as a reference electrode and Li as a counter electrode, the potential was swept at 1.5 to 5 V (vs Li), and thus, the lithium secondary battery was evaluated.

### <Example 1>

Butyl-methylpyrrolidinium tetrafluorosulphonylimide (hereinafter, abbreviated as BMPTFSI) as the ion liquid and trimethyl phosphate (hereinafter, abbreviated as TMP) were mixed in a volume ratio of 60:40. To the mixed solution, lithium trifluoromethane sulphonylimide (hereinafter, abbreviated as LiTFSI: molecular amount 287.1) was dissolved in such an amount that the concentration of the resultant solution might be 1 mol/L (1M), and the resultant solution was used as an electrolyte solution of the flammability test. In the test of discharge capacity, a battery was produced using a positive electrode made of an LiMn₂O₄-based active material and a negative electrode made of a graphite-based material, and evaluated.
Table 1 shows the results.

### <Example 2>

BMPTFSI as the ion liquid, TMP, and EC/DEC (3:7) as the carbonate-based organic solvent were mixed in a volume ratio of 20:40:40 (BMPTFSI/TMP/EC/DEC=20/40/12/28). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution.
Table 1 shows the results.

### <Example 3>

BMPTFSI as the ion liquid, TMP, and EC/DEC (3:7) as the carbonate-based organic solvent were mixed in a volume ratio of 5:35:60 (BMPTFSI/TMP/EC/DEC=5/35/18/42). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution.
Table 1 shows the results.

### <Example 4>

BMPTFSI as the ion liquid, TMP, and EC/DEC (3:7) as the carbonate-based organic solvent were mixed in a volume ratio of 10:30:60 (BMPTFSI/TMP/EC/DEC=10/30/18/42). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution.
Table 1 shows the results.

### <Example 5>

BMPTFSI as the ion liquid, TMP, and EC/DEC (3:7) as the carbonate-based organic solvent were mixed in a volume ratio of 20:60:20 (BMPTFSI/TMP/EC/DEC=20/60/6/14). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution.
Table 1 shows the results.

### <Example 6>

BMPTFSI as the ion liquid, TMP, and EC/DEC (3:7) as the carbonate-based organic solvent were mixed in a volume ratio of 35:15:50 (BMPTFSI/TMP/EC/DEC=35/15/15/35). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution.
Table 1 shows the results.

### <Example 7>

BMPTFSI as the ion liquid, fluorodiethylphosphate (hereinafter, abbreviated as FDEP), and EC/DEC (3:7) as the carbonate-based organic solvent were mixed in a volume ratio of 10:30:60 (BMPTFSI/FDEP/EC/DEC=10/30/18/42). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution. Table 1 shows the results.

### <Example 8>

Butyl methyl piperidinium bis tri fluoro methane sulfonyl imide (hereinafter, abbreviated as BMPpTFSI) as the ion liquid, TMP, and EC/DEC (3:7) as the carbonate-based organic solvent were mixed in a volume ratio of 10:30:60 (BMPpTFSI/TMP/EC/DEC=10/30/18/42). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution. Table 1 shows the results.

### <Example 9>

BMPTFSI as the ion liquid and BMPpTFSI were mixed in a volume ratio of 50:50. The mixed ion liquid, TMP, and EC/DEC (3:7) as the carbonate-based organic solvent were mixed in a volume ratio of 10:30:60 (BMPTFSI/BMPpTFSI/TMP/EC/DEC=5/5/30/18/42). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution.

Table 1 shows the results.

### <Example 10>

BMPTFSI as the ion liquid, TMP, and EC/DEC (3:7) as the carbonate-based organic solvent were mixed in a volume ratio of 10:30:60 (BMPTFSI/TMP/EC/DEC=10/30/18/42). To the mixed solution, LiTFSI was dissolved in such an amount that the concentration of the resultant solution might be 2 mol/L (2 M), and the resultant solution was used as an electrolyte solution of the flammability test. In the test of discharge capacity, the same positive electrode and negative electrode as those in Example 1 were used except for the electrolyte solution.
Table 1 shows the results.

### <Example 11>

BMPTFSI as the ion liquid, FDEP, and EC/DEC (3:7) as the carbonate-based organic solvent were mixed in a volume ratio of 10:30:60 (BMPTFSI/FDEP/EC/DEC=10/30/18/42).
To the mixed solution, 2% by mass ofVC were added, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution. Table 1 shows the results.

### <Example 12>

BMPTFSI as the ion liquid, TMP, and EC/DEC (3:7) as the carbonate-based organic solvent were mixed in a volume ratio of 20:40:40 (BMPTFSI/TMP/EC/DEC=20/40/12/28). To the mixed solution, LiPF₆ was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution. Table 1 shows the results.

### <Comparative Example 1>

To BMPTFSI as the ion liquid, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution. Table 1 shows the results.

### <Comparative Example 2>

To TMP, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution. Table 1 shows the results.

### <Comparative Example 3>

BMPTFSI as the ion liquid and EC/DEC (3:7) as the carbonate-based organic solvent were mixed in a volume ratio of 40:60 (BMPTFSI/EC/DEC=40/18/42). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example I were used except for the electrolyte solution. Table 1 shows the results.

### <Comparative Example 4>

TMP, and EC/DEC (3:7) as the carbonate-based organic solvent were mixed in a volume ratio of 40:60 (TMP/EC/DEC=40/18/42). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution. Table I shows the results.

### <Comparative Example 5>

EMITFSI as the ion liquid, TMP, and EC/DEC (3:7) as the carbonate-based organic solvent were mixed in a volume ratio of 10:30:60 (EMITFSI/TMP/EC/DEC=10/30/18/42). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 1 were used except for the electrolyte solution. Table 1 shows the results.
Table 1 shows the results of the flammability test of the electrolyte solutions with respect to the samples in Examples 1 to 12 and Comparative Examples 1 to 5, and the evaluation of discharge capacity of the coin-type secondary battery. The flammability test results of the electrolyte solution are shown as nonflammable and inflammable in columns of the flammability of Table 1. The discharge capacity evaluation results of the coin-type secondary battery show a capacity value as an initial discharge capacity.

**Table 1**

| | Ion liquid | Phosphoric acid ester derivative | Carbonate-base d organic d organic solvent | Composition ratio (Volume ratio) | | | Lithium salt | Additive | Flammability | Discharge capacity (mAh/g) |
|---|---|---|---|---|---|---|---|---|---|---|
| | X | Y | Z | X | Y | Z | | | | Initial discharge |
| Example 1 | BMPTFSI | TMP | | 60 | 40 | | LiTFSI | | Nonflammable | 42 |
| Example 2 | BMPTFSI | TMP | EC/DEC | 20 | 40 | 40 | LiTFSI | | Nonflammable | 88 |
| Example 3 | BMPTFSI | TMP | EC/DEC | 5 | 35 | 60 | LiTFSI | | Nonflammable | 97 |
| Example 4 | BMPTFSI | TMP | EC/DEC | 10 | 30 | 60 | LiTFSI | | Nonflammable | 98 |
| Example 5 | BMPTFSI | TMP | EC/DEC | 20 | 60 | 20 | LiTFSI | | Nonflammable | 50 |
| Example 6 | BMPTFSI | TMP | EC/DEC | 35 | 15 | 50 | LiTFSI | | Nonflammable | 88 |
| Example 7 | BMPTFSI | FDEP | EC/DEC | 10 | 30 | 60 | LiTFSI | | Nonflammable | 92 |
| Example 8 | BMPpTFSI | TMP | EC/DEC | 10 | 30 | 60 | LiTFSI | | Nonflammable | 95 |
| Example 9 | BMPTFSI+ BMPpTFSI | TMP | EC/DEC | 10 | 30 | 60 | LiTFSI | | Nonflammable | 88 |
| Example 10 | BMPTFSI | TMP | EC/DEC | 10 | 30 | 60 | LiTFSI | | Nonflammable | 105 |
| Example 11 | BMPTFSI | TMP | EC/DEC | 10 | 30 | 60 | LiTFSI | VC | Nonflammable | 102 |
| Example 12 | BMPTFSI | TMP | EC/DEC | 20 | 40 | 40 | LiPF6 | | Nonflammable | 91 |
| Comparative Example 1 | BMPTFSI | | | 100 | | | LiTFSI | | Inflammable | 0 |
| Comparative Example 2 | | TMP | | | 100 | | LiTFSI | | Nonflammable | 0 |
| Comparative Example 3 | BMPTFSI | | EC/DEC | 40 | | 60 | LiTFSI | | Inflammable | 47 |
| Comparative Example 4 | | TMP | EC/DEC | | 40 | 60 | LiTFSI | | Nonflammable | 0 |
| Comparative Example 5 | EMITFSI | TMP | EC/DEC | 10 | 30 | 60 | LiTFSI | | Nonflammable | 5 |

### <Evaluation result of flammability test>

Table 1 shows results obtained by determining whether or not the flame was able to be observed in the case where glass fiber filter paper impregnated with an electrolyte solution was brought close to flame, and the glass fiber was placed away from the flame. In single BMPTFSI as the ion liquid, flammability was observed (Comparative Example 1). Further, flammability was also observed in the case of a mixed electrolyte solution with a carbonate-based organic solvent (Comparative Example 3). However, it was found that, when 15% by volume or more of the phosphoric acid ester derivative was mixed, and the ion liquid was mixed substantially simultaneously, nonflammability was obtained (Examples 1 to 12). Thus, it is desired that the mixed amount of the phosphoric acid ester derivative be 15% by volume or more.

### <Evaluation result of coin-type secondary battery>

The coin-type secondary battery produced as described above was charged and discharged at a current of 0.073 mA, and Table 1 shows an initial discharge capacity. In the case of using single ion liquid or single phosphoric acid ester derivative as an electrolyte solution, no discharge capacity was confirmed (Comparative Examples 1 and 2). In this invention, it was found that, when the electrolyte solutions that do not function in a single form are mixed, discharge capacity was confirmed (Example 1). Further, the following was also found simultaneously: in the case of two kinds mixed electrolyte solution in which 40% by volume of phosphoric acid ester derivative was mixed with the carbonate-based electrolyte solution, no discharge capacity was observed (Comparative Example 4), whereas in the case of three kinds mixed electrolyte solution in which 20% by volume of the carbonate-based organic solvent was changed to the ion liquid BMPTFSI, discharge capacity was confirmed (Example 2). Therefore, it is considered that the ion liquid has an effect of suppressing the decomposition of a phosphoric acid ester. Further, even in an electrolyte solution in which 60% by volume (which is a high mixed ratio) of phosphoric acid ester derivative was mixed, discharge capacity was confirmed in the case of three kinds mixed electrolyte solution containing the ion liquid (Example 5).

As described above, the battery is not operated with two kinds mixed electrolyte solution of the carbonate-based electrolyte solution and the phosphoric acid ester. However, the battery can be operated by further adding the ion liquid. Of the ion liquids, in the case of mixing ion liquid whose reduction resistance is poor, such as EMITFSI, discharge capacity is hardly obtained (Comparative Example 5). However, it was found that, when ion liquid with a high reduction resistance, such as BMPTFSI and BMPpTFSI, is mixed, the discharge capacity increases remarkably (Examples 2 to 8). As EMITFSI and the phosphoric acid ester derivative have poor reduction resistance, they are decomposed on the negative electrode. In contrast, in the case of using BMPTFSI having high reduction resistance, it is considered that the decomposition reaction thereof does not occur, and the decomposition reaction of the phosphoric acid ester derivative is suppressed.

Further, an increase in discharge capacity was confirmed due to the addition of VC, and the effect of forming a coating on the surface of the negative electrode was confirmed even in the case of a mixed electrolyte solution (Example 11).

### <Aluminum corrosion test>

The results obtained by measuring LV, using the electrolyte solution of Example 2 and the electrolyte solution of Comparative Example 4, are shown in lines A and B in FIG 1. According to the LV measurement results using an aluminum collector as a working electrode, in the electrolyte solution of Comparative Example 4 in which 1.0 M of an LiTFSI salt was dissolved in TMP/EC/DEC (40/18/42), a current peak caused by the corrosion reaction of the aluminum collector was observed in the vicinity of 3.2 V (Li/Li^{±}). However, in the electrolyte solution of Example 2 in which 1.0 M of an LiTFSI salt was dissolved in BMPTFSI/TMP/EC/DEC (20/40/12/28) with 20% BMPTFSI mixed in EC/DEC, a current peak caused by the corrosion reaction of the aluminum collector was not observed. It was newly found that the corrosion reaction with the aluminum collector can be suppressed even using an LiTFSI salt, by mixing the ion liquid with an electrolyte solution made of a carbonate electrolyte solution and a phosphoric acid ester.

Next, the coin cell evaluation in the case of using a negative electrode with an SEI as a negative electrode is shown. As Examples 13 to 34, lithium ion secondary batteries in which the ion liquid, phosphoric acid ester derivative, carbonate-based organic solvent, and a composition ratio thereof, and additives described in the embodiment were varied. For comparison, Comparative Examples 6 to 12 were produced, and similarly subjected to flammability test evaluation and measured for discharge capacity. In the same way as the above, in the flammability test evaluation, the case where the flame was not observed twice was determined as "nonflammable", and the case where the flame was observed at one of the first and second times was determined as "inflammable."

### <Example 13>

EMIFSI as the ion liquid and TMP were mixed in a volume ratio of 90:10. To the mixed solution, lithium fluorosulphonylimide (hereinafter, abbreviated as LiFSI: molecular weight 187.1) was dissolved in such an amount that the concentration of the resultant solution might be 1 mel/L (1 M), and the resultant solution was used as an electrolyte solution of the flammability test. The test of discharge capacity was conducted using a positive electrode made of an LiMn₂O₄-based active material and a negative electrode with an SEI. Table 2 shows the results.

### <Example 14>

To a solution in which EMIFSI as the ion liquid and TMP were mixed in a volume ratio of 85:15, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 15>

To a solution in which EMIFSI as the ion liquid and TMP were mixed in a volume ratio of 80:20, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 16>

To a solution in which EMIFSI as the ion liquid and TMP were mixed in a volume ratio of 60:40, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 17>

To a solution in which EMIFSI as the ion liquid and TMP were mixed in a volume ratio of 50:50, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 18>

EMIFSI as the ion liquid, TMP, and EC/DEC (3:7) as the carbonate-based organic solvent were mixed in a volume ratio of 60:20:20 (EMIFSI/TMP/EC/DEC=60/20/6/14). To the mixed solution, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 19>

EMIFSI as the ion liquid, TMP, and EC/DEC (3:7) as the carbonate-based organic solvent were mixed in a volume ratio of 40:40:20 (EMIFSI/TMP/EC/DEC=40/40/6/14). To the mixed solution, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 20>

EMIFSI as the ion liquid, TMP, and EC/DEC (3:7) as the carbonate-based organic solvent were mixed in a volume ratio of 20:40:40 (EMIFSI/TMP/EC/DEC=20/40/12/28). To the mixed solution, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 21>

EMIFSI as the ion liquid, TMP, and EC/DEC (3:7) as the carbonate-based organic solvent were mixed in a volume ratio of 30:20:50 (EMIFSI/TO/EC/DEC=30/20/15/35). To the mixed solution, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 22>

To a solution in which EMIFSI as the ion liquid and diethyl fluorophosphate (hereinafter, abbreviated as FDEP) were mixed in a volume ratio of 60:40, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 23>

EMIFSI as the ion liquid, FDEP, and EC/DEC (3:7) as the carbonate-based organic solvent were mixed in a volume ratio of 60:20:20 (EMIFSI/FDEP/EC/DEC=60/20/6/14). To the mixed solution, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 24>

To EMIFSI as the ion liquid, methyl propyl pyrrolidinium fluorosulphonyl imide (hereinafter, abbreviated as P13FSI) also as the ion liquid was mixed in a volume ratio of 70:30. To a solution (EMIFSI/P13FSI/TMP/EC/DEC=42/18/20/6/14) in which the mixed ion liquid, TMP, and EC/DEC (3:7) were mixed in a volume ratio of 60:20:20, LiFSI was dissolved in such an amount that the concentration of the resultant solution might be 1 mol/L (1 M), and the resultant solution was used as an electrolyte solution of the flammability test. In the test of the discharge capacity, the same positive electrode and negative electrode as those in Example 13 were used except for the electrolyte solution. Table 2 shows the results.

### <Example 25>

To EMIFSI as the ion liquid, methyl propyl piperidinium fluorosulphonyl imide (hereinafter, abbreviated as PP13FSI) also as the ion liquid was mixed in a volume ratio of 70:30. To a solution (EMIFSI/PP13FSI/TMP/EC/DEC=42/18/20/6/14) in which the mixed ion liquid, TMP, and EC/DEC (3:7) were mixed in a volume ratio of 60:20:20, LiFSI was dissolved in such an amount that the concentration of the resultant solution might be 1 mol/L (1 M), and the resultant solution was used as an electrolyte solution of the flammability test. In the test of the discharge capacity, the same positive electrode and negative electrode as those in Example 13 were used except for the electrolyte solution. Table 2 shows the results.

### <Example 26>

The EMIFSI as the ion liquid and TMP were mixed in a volume ratio of 60:40. To the mixed solution, LiFSI was dissolved in such an amount that the concentration of the resultant solution might be 1 mol/L (1 M), and further, 5% by mass of vinylethylene carbonate (hereinafter, abbreviated as VC) was mixed. The resultant mixture was used as an electrolyte solution of the flammability test. In the test of the discharge capacity, the same positive electrode and negative electrode as those in Example 13 were used except for the electrolyte solution. Table 2 shows the results.

### <Example 27>

EMIFSI as the ion liquid, TMP, and EC/DEC (3:7) as the carbonate-based organic solvent were mixed in a volume ratio of 60:20:20 (EMIFSI/TMP/EC/DEC=60/20/6/14). To the mixed solution, LiFSI was dissolved in such an amount that the concentration of the resultant solution might be 1 mol/L (1 M), and further, 5% by mass of VC was mixed. The resultant solution was used as an electrolyte solution of the flammability test. In the test of discharge capacity, the same positive electrode and negative electrode as those in Example 13 were used except for the electrolyte solution. Table 2 shows the results.

### <Example 28>

BMPTFSI as the ion liquid, TMP, and EC/DEC (3:7) as the carbonate-based organic solvent were mixed in a volume ratio of 20:40:40 (BMPTFSI/TMP/EC/DEC=20/40l12/28). To the mixed solution, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Example 29>

BMPTFSI as the ion liquid, TMP, and EC/DEC (3:7) as the carbonate-based organic solvent were mixed in a volume ratio of 20:40:40 (BMPTFSI/TMP/EC/DEC=20/40/12/28). To the mixed solution, LiTFSI was dissolved in such an amount that the concentration of the resultant solution might be 2 mol/L (2 M), and the resultant solution was used as an electrolyte solution of the flammability test. In the test of discharge capacity, the same positive electrode and negative electrode as those in Example 13 were used except for the electrolyte solution. Table 2 shows the results.

### <Example 30>

EMITFSI as the ion liquid, TMP, and EC/DEC (3:7) as the carbonate-based organic solvent were mixed in a volume ratio of 20:40:40 (BMPTFSI/TMP/EC/DEC=20/40/12/28). To the mixed solution, LiTFSI was dissolved in such an amount that the concentration of the resultant solution might be 2 mol/L (2 M), and the resultant solution was used as an electrolyte solution of the flammability test. In the test of discharge capacity, the same positive electrode and negative electrode as those in Example 13 were used except for the electrolyte solution. Table 2 shows the results.

### <Example 31>

Triethylsulphonium fluorosulphonylimide (hereinafter, abbreviated as TESFSI) as the ion liquid, TMP, and EC/DEC (3:7) as the carbonate-based organic solvent were mixed in a volume ratio of 60:20:20 (TESFSI/TMP/EC/DEC=60/20/6/14). To the mixed solution, LiFSI was dissolved in such an amount that the concentration of the resultant solution might be 1 mol/L (1 M), and the resultant solution was used as an electrolyte solution of the flammability test. In the test of the discharge capacity, the same positive electrode and negative electrode as those in Example 13 were used except for the electrolyte solution. Table 2 shows the results.

### <Example 32>

TESFSI as the ion liquid, TMP, and EC/DEC (3:7) as the carbonate-based organic solvent were mixed in a volume ratio of 60:20:20 (TESFSI/TMP/EC/DEC=60/20/6/14). To the mixed solution, LiFSI was dissolved in such an amount that the concentration of the resultant solution might be 1 mol/L (1 M), and further, 5% by mass of VC was mixed. The resultant solution was used as an electrolyte solution of the flammability test. In the test of the discharge capacity, the same positive electrode and negative electrode as those in Example 13 were used except for the electrolyte solution. Table 2 shows the results.

### <Example 33>

TESFSI as the ion liquid and TMP were mixed in a volume ratio of 60:40. To the mixed solution, LiFSI was dissolved in such an amount that the concentration of the resultant solution might be 1 mol/L (1 M), and further, 5% by mass of VC was mixed. The resultant solution was used as an electrolyte solution of the flammability test. In the test of the discharge capacity, the same positive electrode and negative electrode as those in Example 13 were used except for the electrolyte solution. Table 2 shows the results.

### <Example 34>

EMIFSI as the ion liquid and TESFSI were mixed in a volume ratio of 70:30. To a solution in which the mixed ion liquid, TMP, and EC/DEC (3:7) were mixed in a volume ratio of 60:20:20 (EMIFSI/TESFSI/TMP/EC/DEC=42/18/20/6/14), LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Comparative Example 6>

To EMITFSI as the ion liquid, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Comparative Example 7>

To a solution in which EMITFSI as the ion liquid and TMP were mixed in a volume ratio of 90:10, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Comparative Example 8>

To a solution in which EMITFSI as the ion liquid and TMP were mixed in a volume ratio of 85:15, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Comparative Example 9>

To a solution in which EMITFSI as the ion liquid and TMP were mixed in a volume ratio of 80:20, LiTFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Comparative Example 10>

To EMIFSI as the ion liquid, LiFSI was dissolved in such an amount that the concentration of the resultant solution might be 1 mol/L (1 M), and the resultant solution was used as an electrolyte solution of the flammability test. In the test of discharge capacity, the same positive electrode and negative electrode as those in Example 13 were used except for the electrolyte solution. Table 2 shows the results.

### <Comparative Example 11>

EMIFSI as the ion liquid and EC/DEC (3:7) as the carbonate-based organic solvent were mixed in a volume ratio of 60:40 (EMIFSI/EC/DEC=60/12/28). To the mixed solution, LiFSI was dissolved in such an amount that the concentration of the resultant solution might be 1 mol/L(1 M), and the resultant solution was used as an electrolyte solution of the flammability test. In the test of the discharge capacity, the same positive electrode and negative electrode as those in Example 13 were used except for the electrolyte solution. Table 2 shows the results.

### <Comparative Example 12>

To EC/DEC (3:7) as the carbonate-based organic solvent, LiPF₆ was dissolved in such an amount that the concentration of the resultant solution might be 1 mol/L (1 M), and the resultant solution was used as an electrolyte solution of the flammability test. In the test of the discharge capacity, the same positive electrode and negative electrode as those in Example 13 were used except for the electrolyte solution. Table 2 shows the results.

Table 2 shows the results of the flammability test of the electrolyte solutions with respect to the samples in Examples 13 to 34 and Comparative Examples 6 to 12, and the evaluation of discharge capacity of the coin-type secondary battery. The flammability test results of the electrolyte solution are shown as inflammable and nonflammable in columns of the flammability of Table 2. The discharge capacity evaluation results of the coin-type secondary battery show a capacity value as an initial discharge capacity.

**Table 2**

| | Ion liquid | Phosphoric acid ester derivative | Carbonate-based organic solvent | Composition ratio (Volume ratio) | | | Lithium salt | Additive | Flammabilily | Discharge capacity (mAh/g) |
|---|---|---|---|---|---|---|---|---|---|---|
| | X | Y | Z | X | Y | Z | | | | Initial discharge |
| Example 13 | EMIFSI | TMP | | 90 | 10 | | LiFSI | | Inflammable | 83 |
| Example 14 | EMIFSI | TMP | | 85 | 15 | | LiFSI | | Nonflammable | 87 |
| Example 15 | EMIFSI | TMP | | 80 | 20 | | LiFSI | | Nonflammable | 92 |
| Example 16 | EMIFSI | TMP | | 60 | 40 | | LiFSI | | Nonflammable | 86 |
| Example 17 | EMIFSI | TMP | | 50 | 50 | | LiFSI | | Nonflammable | 46 |
| Example 18 | EMITFSI | TMP | EC/DEC | 60 | 20 | 20 | LiFSI | | Nonflammable | 105 |
| Example 19 | EMIFSI | TMP | EC/DEC | 40 | 40 | 20 | LiFSI | | Nonflammable | 89 |
| Example 20 | EMIFSI | TMP | EC/DEC | 20 | 40 | 40 | LiFSI | | Nonflammable | 103 |
| Example 21 | EMIFSI | TMP | EC/DEC | 30 | 20 | 50 | LiFSI | | Inflammable | 117 |
| Example 22 | EMIFSI | FDEP | | 60 | 40 | | LiFSI | | Nonflammable | 22 |
| Example 23 | EMIFSI | FDEP | EC/DEC | 60 | 20 | 20 | LiFSI | | Nonflammable | 84 |
| Example 24 | EMIFSI/P13FSI (7:3) | TMP | EC/DEC | 60 | 20 | 20 | LiFSI | | Nonflammable | 92 |
| Example 25 | EMIFSI/PP13FSI (7:3) | TMP | EC/DEC | 60 | 20 | 20 | LiFSI | | Nonflammable | 76 |
| Example 26 | EMIFSI | TMP | | 60 | 40 | | LiFSI | VC | Nonflammable | 56 |
| Example 27 | EMIFSI | TMP | EC/DEC | 60 | 20 | 20 | LiFSI | VC | Nonflammable | 114 |
| Example 28 | BMPTFSI | TMP | EC/DEC | 20 | 40 | 40 | LiTFSI | | Nonflammable | 87 |
| Example 29 | BMPTFSI | TMP | EC/DEC | 20 | 40 | 40 | LiTFSI | | Nonflammable | 110 |
| Example 30 | EMITFSI | TMP | EC/DEC | 20 | 40 | 40 | LiTFSI | | Nonflammable | 108 |
| Example 31 | TESFSI | TMP | EC/DEC | 60 | 20 | 20 | LiFSI | | Nonflammable | 59 |
| Example 32 | TESFSI | TMP | EC/DEC | 60 | 20 | 20 | LiFSI | VC | Nonflammable | 104 |
| Example 33 | TESFSI | TMP | | 60 | 40 | | LiFSI | VC | Nonflammable | 43 |
| Example 34 | EMIFSI/TESFSI (7:3) | TMP | EC/DEC | 60 | 20 | 20 | LiFSI | | Nonflammable | 99 |
| Comparative Example 6 | EMITFSI | | | 100 | | | LiTFSI | | Inflammable | 23 |
| Comparative Example 7 | EMITFSI | TMP | | 90 | 10 | | LiTFSI | | Inflammable | 28 |
| Comparative Example 8 | EMITFSI | TMP | | 85 | 15 | | LiTFSI | | Nonflammable | 31 |
| Comparative Example 9 | EMITFSI | TMP | | 80 | 20 | | LiTFSI | | Nonflammable | 35 |
| Comparative Example 10 | EMIFSI | | | 100 | | | LiFSI | | Inflammable | 67 |
| Comparative Example 11 | EMIFSI | | EC/DEC | 60 | | 40 | LiFSI | | Inflammable | 105 |
| Comparative Example 12 | | | EC/DEC | | | 100 | LiPF₆ | | Inflammable | 117 |

### <Evaluation result of flammability test>

Table 2 shows results obtained by determining whether or not the flame was observed in the case where glass fiber filter paper impregnated with an electrolyte solution was brought close to flame, and the glass fiber was placed away from the flame. In single ion liquid, flammability was observed (Comparative Examples 6 and 10), and in the case where the phosphoric acid ester derivative was 10% by volume or less, flammability was observed (Example 13 and Comparative Example 7). On the other hand, as the electrolyte solution containing 15% by volume or more of the phosphoric acid ester derivative is nonflammable, it is desired that the mixed amount of the phosphoric acid ester derivative was 15% by volume or more (Example 14).

### <Evaluation result of coin-type secondary battery>

The coin-type secondary battery produced as described above was charged and discharged at a current of 0.073 mA, and Table 2 shows an initial discharge capacity. In the case of using single ion liquid of Comparative Examples 6 and 10 as an electrolyte solution, the discharge capacity that was a half or less of that of the electrolyte solution formed of a carbonate-based organic solvent was obtained, as shown in Comparative Example 12. However, similar experiments were conducted, varying the composition ratio of EMIFSI, the phosphoric acid ester derivative, and EC/DEC. As a result, an increase in an initial discharge capacity was observed by allowing 10% by volume or more of the phosphoric acid ester derivative to be contained in EMIFSI. Further, an increase in discharge capacity was observed with the addition ofVC, and the effect of forming a coating on the surface of a negative electrode was confirmed even in the case of the mixed electrolyte solution.

Further, the carbonate-based organic solvent may be contained in the electrolyte solution. When these liquids are mixed appropriately, an electrolyte solution can be rendered nonflammable. Further, a secondary battery having battery characteristics equivalent to those of the existing carbonate-based organic solvent can be obtained (Examples 7-21).

As described above, in the secondary battery of this invention, an electrolyte solution can be rendered nonflammable, and a secondary battery having larger discharge capacity is obtained. The secondary battery of this invention includes at least a positive electrode, a negative electrode, and an electrolyte solution. The positive electrode is formed of an oxide that absorbs and desorbs lithium ions, and the negative electrode is formed of a carbon material that absorbs and desorbs lithium ions. The electrolyte solution is characterized by being formed of a phosphoric acid ester derivative and ion liquid.

In the secondary battery of this invention, examples of a cation component of the ion liquid to be used as the electrolyte solution include pyrrolidinium cations represented by Chemical Formula 2 or piperidinium cations represented by Chemical Formula 3. Further, as the ion liquid, a solution containing sulphonium cations may be used. Further, the cation component of the ion liquid may contain at least two different kinds of cations. Further, anions of the ion liquid may contain bis(fluorosulphonyl)imide anions as constituent elements. It is preferred that the ratio of the ion liquid contained in the entire electrolyte solution be 5% by volume or more and less than 80% by volume.

Further, as the phosphoric acid ester derivative, trimethyl phosphate or the one with at least one atom excluding a phosphorus atom being substituted by a halogen atom can also be used. It is preferred that the ratio of the phosphoric acid ester derivative contained in the entire electrolyte solution be 15% by volume or more. Further, the electrolyte solution can contain a carbonate-based organic solvent. When the electrolyte solution contains a carbonate-based organic solvent, the discharge capacity is enhanced. However, if the mixing ratio thereof is too high, the electrolyte solution is rendered inflammable. Therefore, the mixing ratio of the carbonate-based organic solvent is preferably 10% by volume or more and less than 80% by volume of the entire electrolyte solution.

Further, the electrolyte solution can contain a lithium salt, and it is preferred that the concentration of the lithium salt dissolved in the electrolyte solution be 0.1 mol/L to 2.5 mol/L. Further, a coating may be previously formed electrochemically on the surface of the negative electrode of the secondary battery. The coating does not pass an electrolyte solution but passes ions. Further, in order to form a coating on the negative electrode in the process of charging and discharging of the secondary battery, the electrolyte solution can contain a coating formation additive.

Thus, the invention of the present application has been described with reference to embodiments and examples. However, the invention of the present application is not limited to the above-mentioned embodiments and examples. The configuration and detail of the invention of the present application can be modified variously within the scope of the invention of the present application as long as those skilled in the art can understand the modification.

This application claims priority from Japanese Patent Application No. 2008-131050, filed on May 19, 2008, and Japanese Patent Application No. 2008-233574, filed on September 11, 2008, the entire disclosure of which is incorporated herein by reference.

## Claims

1. A secondary battery, **characterized in that** a positive electrode is formed of an oxide that absorbs and desorbs lithium ions, a negative electrode is formed of a carbon material that absorbs and desorbs lithium ions, and an electrolyte solution is formed of ion liquid and a phosphoric acid ester derivative.

2. A secondary battery according to claim 1, wherein the phosphoric acid ester derivative is trimethyl phosphate.

3. A secondary battery according to claim 1, wherein at least one atom excluding a phosphorus atom of the phosphoric acid ester derivative is substituted by a halogen atom.

4. A secondary battery according to claim 1, wherein a ratio of the phosphoric acid ester derivative contained in an entire electrolyte solution is 15% by volume or more.

5. A secondary battery according to claim 1, wherein a ratio of the ion liquid contained in an entire electrolyte solution is 5% by volume or more and less than 80% by volume.

6. A secondary battery according to claim 1, wherein a concentration of a lithium salt dissolved in the electrolyte solution is 0.1 mol/L to 2.5 mol/L.

7. A secondary battery according to claim 1, wherein the electrolyte solution contains a carbonate-based organic solvent.

8. A secondary battery according to claim 7, wherein a ratio of the carbonate-based organic solvent contained in the entire electrolyte solution is 10% by volume or more and 80% by volume or less.

9. A secondary battery according to claim 1, wherein a cation of the ion liquid is formed of any one of a pyrrolidinium cation represented by Chemical Formula 2 and a piperidinium cation represented by Chemical Formula 3.

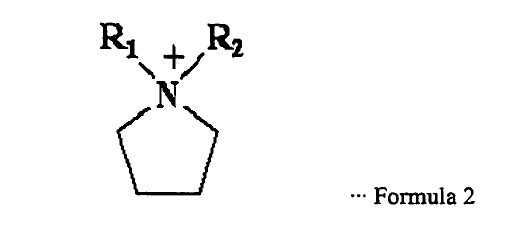

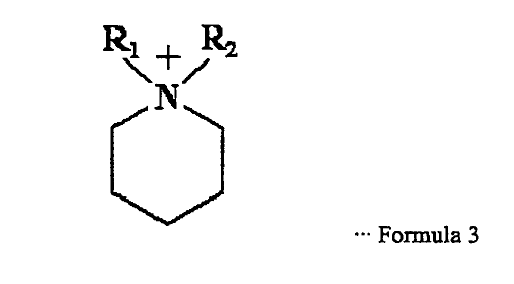

10. A secondary battery according to claim 1, wherein the ion liquid contains a sulfonium cation.

11. A secondary battery according to claim 1, wherein an anion of the ion liquid contains a bis(fluorosulphonyl)imide anion as a constituent element.

12. A secondary battery according to claim 1, wherein the ion liquid contains at least two different kinds of cations.

13. A secondary battery according to claim 1, wherein a coating is previously formed electrochemically on a surface of the negative electrode.

14. A secondary battery according to claim 1, wherein the electrolyte solution contains a coating formation additive.

## Amended claims

### Amended claims under Art. 19.1 PCT

1. (Amended) A secondary battery, **characterized in that** a positive electrode is formed of an oxide that absorbs and desorbs lithium ions, a negative electrode is formed of a carbon material that absorbs and desorbs lithium ions, an electrolyte solution is formed of ion liquid and a phosphoric acid ester derivative, a ratio of the phosphoric acid ester derivative contained in the entire electrolyte solution is 15% by volume or more, and a ratio of the ion liquid is contained in the entire electrolyte solution is 5% by volume or more and less than 80% by volume.

2. A secondary battery according to claim 1, wherein the phosphoric acid ester derivative is trimethyl phosphate.

3. A secondary battery according to claim 1, wherein at least one atom excluding a phosphorus atom of the phosphoric acid ester derivative is substituted by a halogen atom.

4. (Deleted)

5. (Deleted)

6. A secondary battery according to claim 1, wherein a concentration of a lithium salt dissolved in the electrolyte solution is 0.1 mol/L to 2.5 mol/L.

7. A secondary battery according to claim 1, wherein the electrolyte solution contains a carbonate-based organic solvent.

8. A secondary battery according to claim 7, wherein a ratio of the carbonate-based organic solvent contained in the entire electrolyte solution is 10% by volume or more and 80% by volume or less.

9. A secondary battery according to claim 1, wherein a cation of the ion liquid is formed of any one of a pyrrolidinium cation represented by Chemical Formula 2 and a piperidinium cation represented by Chemical Formula 3.

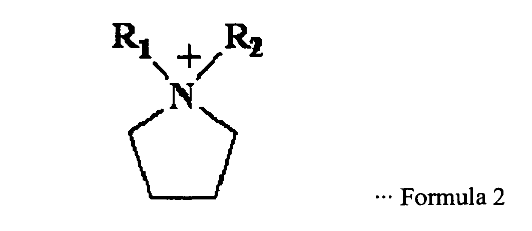

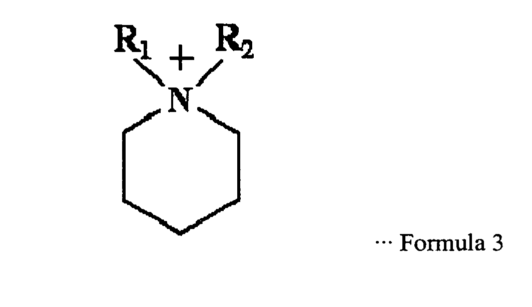

10. A secondary battery according to claim 1, wherein the ion liquid contains a sulfonium cation.

11. A secondary battery according to claim 1, wherein an anion of the ion liquid contains a bis(fluorosulphonyl)imide anion as a constituent element.

12. A secondary battery according to claim 1, wherein the ion liquid contains at least two different kinds of cations.

13. A secondary battery according to claim 1, wherein a coating is previously formed electrochemically on a surface of the negative electrode.

14. A secondary battery according to claim 1, wherein the electrolyte solution contains a coating formation additive.

15. (Added) An electrolyte solution, **characterized in that** a ratio of a phosphoric acid ester derivative contained in an entire electrolyte solution is 15% by volume or more, and a ratio of ion liquid contained in the entire electrolyte solution is 5% by volume or more and less than 80% by volume.
